(19) Europäisches Patentamt
European Patent Office
Office européen des brevets

(11) **EP 4 431 900 A1**

(12) **EUROPEAN PATENT APPLICATION**

(43) Date of publication:
**18.09.2024  Bulletin 2024/38**

(51) International Patent Classification (IPC):
***G01M 11/02*** (2006.01)    ***G01J 3/46*** (2006.01)
***G02C 7/10*** (2006.01)

(21) Application number: 23161709.3

(22) Date of filing: **14.03.2023**

(52) Cooperative Patent Classification (CPC):
**G01M 11/0285; G01J 3/46; G02C 7/105**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Carl Zeiss Vision International GmbH 73430 Aalen (DE)**

(72) Inventors:
• **SEMERARO, Filippo**
  **21020 Mornago (IT)**
• **BOARETTO, Matteo**
  **21052 BUSTO ARSIZIO   (VA) (IT)**
• **MALNATI, Sabrina**
  **21040 (VA) Lozza (IT)**

(74) Representative: **Kraus & Lederer PartGmbB Thomas-Wimmer-Ring 15 80539 München (DE)**

(54) **METHOD SUITABLE FOR GRADIENT SPECTACLE LENS EVALUATION AND CORRESPONDING DEVICE**

(57)    A computer-implemented method suitable for gradient spectacle lens evaluation and a corresponding computer are provided. Measurement data indicating at least one of color or transmission of a plurality of measurement points along at least one line across the spectacle lens is received. The method further comprises calculating scalar values representing a difference of the measurement data of adjacent or overlapping measurement point groups of the plurality of measurement points. The spectacle lens is then evaluated based on the scalar values.

Fig. 2

**Description**

The present application relates to computer-implemented methods suitable for evaluation of gradient spectacle lenses and relates to corresponding devices.

Gradient spectacle lenses are lenses which do not have a uniform color, but which have varying color over their surface. Such gradient spectacle lenses may for example be used for sunglasses and typically include one or more darker areas having lower light transmission and one or more lighter areas having higher light transmission. For example, in one type of gradient spectacle lenses for sunglasses, when the sunglasses are worn, the upper part (towards the top of the head in the as worn position), referred to as top part or simply as top, is darker and the lower part, referred to as bottom part or bottom, is lighter, with a transition area inbetween.

When producing such gradient spectacle lenses, e.g. for sunglasses, it is desirable to evaluate if the coloring has been applied to the lenses as per requested specifications, e.g. at the correct position and/or with right width of gradient.

For example, in a typical production process, a production tinting bath is programmed according to a target gradient and the lenses are subjected to a coloring bath accordingly. Then, the actual gradient color applied to the lens is measured and compared with the target, and if the measured gradient does not sufficiently correspond to the target, the lens may be rejected, and/or the production process may be adapted.

Conventionally, the width of gradient color on the lens is measured through visual observation of the lens on a light box with the help of a special ruler. This leads to some amount of subjectivity of the observation, for example the question where the gradient starts and ends precisely. For example, the human eye is limited as regards detecting small color variations, which may lead to different measurements depending on the operator being performing the measurements.

The Smart Shade device which used to be provided by Smart Vision, but is no longer on the market, was a special device to analyze gradient of spectacle lenses and which returned a percentual match of surface area with respect to a master gradient lens, without giving any further information on the measured lens. The master gradient lens was a lens which was regarded as a target design, i.e. taken as a lens specimen manufactured as desired.

Therefore, even if defective lenses could be identified due to a low percentage of surface area matching, it was for example difficult to adapt the production based on this result alone, as no further information could be obtained (e.g. width of darker, transition and clearer areas and positioning on the lens of these areas). Moreover, it was necessary to identify a reference point on the lens under examination for the measurement and if this reference point was not exactly the same between master lens and sample lens, the Smart Shade device was unable to identify it.

Starting from this conventional solution for automatic lens measurement, it is an object underlying the present invention to provide an improved method for evaluating gradient spectacle lenses which is able to give more information about the gradient, for example position of the gradient, and which may be applied to different types of gradient lenses.

According to a first aspect of the invention, a computer-implemented method suitable for evaluating a gradient spectacle lens is provided, comprising receiving measurement data indicating at least one of color and transmission at a plurality of measurement points along at least one lines across the gradient spectacle lens, characterized by calculating scalar values representing a difference between the measurement data of adjacent or overlapping measurement point groups, each measurement point group including at least one measurement point of the plurality of measurement points, and evaluating the gradient spectacle lens based on the scalar value.

The receiving of the measurement data may for example be done by uploading the measurement data to a computer performing the method or to a storage like cloud storage accessible by the computer.

By providing the scalar values, a quantitative evaluation of the gradient spectacle lens is facilitated, as the magnitude of the scalar values directly correlate to the gradient: high scalar value represents a large difference between the measurement data of the adjacent measurements point groups and therefore a large gradient, while low scalar values conversely represent a low gradient.

A scalar is a value which may be represented by a single real number. In contrast, the measurement data indicating color contains a plurality of values per measurement points. To represent a color, at least three values are typically used. For example, the color may be represented in the RGB (red, green, blue) system with three values. Other systems for representing the color may also be used, like the L*a*b color space or the CMY color space. In such cases, the measurement data for each point may be represented as a vector having typically at least three components, which makes an analysis directly based on the measurement data more difficult than the scalar values.

A measurement point group includes one or more measurement points of the plurality of measurement points. For example, in case the at least one line across the spectacle lens is a single line, each group may include one or more adjacent points along the line. Two point groups are adjacent if they immediately follow each other along the direction of the at least one line without having common measurement points, and are overlapping if they include common measurement points. For example, in case of a single line, when each point group includes three measurement points, the group may advance by two points from group to group, such that two successive groups overlap at one point. These are merely some numerical examples. Including more than one measurement point in each point group has the advantage of some smoothing or averaging effects, such that measurement tolerances of the individual measurement points may be a statistical average.

The at least one line may also include two or more parallel lines. In this case, each measurement point group may include one or more points of each line, wherein the points for each line have the same position along a direction of the lines. For example, in some embodiments between three and seven lines, for example five lines, may be used. A higher number of lines may increase a measurement time needed for capturing the measurement data but may increase the above-mentioned averaging effect and make the measurement more precise. A number of lines between three and seven lines is a good compromise between accuracy of measurement and measurement time required.

Measurement point groups are overlapping if they share one ore more measurement points. The term "difference between the measurement data of adjacent or overlapping measurement point groups" also covers cases where more than two measurement point groups are used for calculating the scalar values.

The scalar values essentially constitute a function along the length direction of the at least one line, which may be evaluated in various ways. This function, in other words, represents the scalar values over the position along the line.

In case the measurement data indicates the color, calculating the scalar values may be performed using so-called $\Delta E_{CMC}(1:1)$ values. This approach is for example defined in ASTM standard D2244-22 (see in particular equations (21) and (22) thereof), and additional information may be found in ASTM E308-99. The $\Delta E_{CMC}(1:1)$ metric defined in the standard has the advantage of providing a standardized and well-understood metric for the color difference. For this, if the measurement data is already the LCh color space (lightness, Chroma and hue), and $\Delta E_{CMC}(1:1)$ may be calculated then based on the standard equations given by the standard. If the color is measured in terms of RGB, the conversion to LCh may be via the L*a*b color space defined in EN ISO 116464-4. Other scalar values, also defined in the above standard, may be used instead of $\Delta E_{CMC}(1:1)$, for example $\Delta E_{CMC}(2:1)$. The use of $\Delta E_{CMC}(a:b)$ values, where a=1 or 2 and b=1, has the advantage that by the selction of a and b also the human perception can be taken into account. Alternatively, $\Delta E$ as defined in EN ISO 11664-4 which generally defines the L*a*b* color space may be used. Also these metrics are well-defined standard metrics and are therefore well understood. In yet other embodiments, the color values may be converted to greyscale values, for example by calculating a greyscale value gs for each measurement point according to gs = (R + G + B)/3, where R, G and B are red, green and blue values, respectively, averaging the greyscale values over the respective measurement point groups and calculating differences between the averaged values of adjacent point groups. In case the measurement data indicates the transmission the same calculation as explained above for greyscale values may be used.

The measurement data may be obtained by conventional measurement devices, for example the UTM 5064 device (uniformity of luminous transmittance) as supplied by AD engineering.

In some embodiments where the color is used to calculate the scalar values, nevertheless in addition to the color the measurement data may also indicate the transmission of the gradient spectacle lens at the plurality of measurement points. The transmission, preferably averaged over the measurement point groups, may be displayed to a user in addition to e.g. displaying the scalar values or color information. This gives additional information to a user.

For evaluation, the scalar values obtained may be normalized, for example such that the highest scalar value has a value of 1 (or 100%). This facilitates handling of the data, for example the use of generic threshold values as explained below. However, the scalar values may also be evaluated without such a normalization, for example by setting thresholds depending on a maximum value of the scalar values.

As mentioned briefly above, evaluating the spectacle lens based on the scalar values may include comparing the scalar values to one or more thresholds. A scalar value above a threshold indicates a high difference in the measurement data and therefore a transition region where a high color gradient is present, whereas a scalar value defined below a respective threshold indicates a low difference. In this way, various areas may be identified, for example transition areas between certain positions along the at least one line and areas outside the transition area. These areas can be converted in widths with unit of measure in mm and compared with the values (mm) of recorded standard targets and a PASS/FAIL method may be adopted the evaluate the difference of width areas using +/-3mm of tolerance. For example, in case of a typical gradient lens with a darker top and a lighter bottom, a bottom area a transition area and a top area may be identified. The positions of the area boundaries, which may be where the scalar value crosses the threshold, may then be compared to nominal values for a respective lens type under examination.

Some types of lenses, for example lenses which have a lighter inner side and a darker outer side, or lenses which have darker bottom and top parts separated by a lighter inner part, may have more than one transition areas along the at least one line, and the same or different thresholds may be used for different transition areas. The evaluation for different transition areas may also be separated to perform a more precise analysis for each transition areas. In particular, the scalar values may then be normalized for each transition area separately, and in some embodiments the same threshold value may be used for each (separately normalized) transition area. In other embodiments, different threshold values may be used.

In a preferred embodiment, the same threshold value may be used for all normalized scalar values, for example a threshold value between 0.7 and 0.9 (70% and 90%). This makes evaluation easier. In other embodiments, different threshold values may be used for different lens types.

In some embodiments, nominal values for the positions of the area boundaries mentioned above may be stored for different lens types. In other embodiments, they may be input manually. In some embodiments, the lens type may be provided together with the measurement data, for example read by a corresponding measurement device based on a label of the lens.

For obtaining the measurement data, the lens may be positioned such that the at least one line coincides with a gradient direction. For some kind of lenses like the above mentioned lenses which have a lighter inner side and a darker outer side the at least one line may run essentially through the center of the lens. This ensures that the width of the areas (dark, light, transition) can be reproducibly measured.

In some embodiments, to assist an operator, a curve representing the color values may be displayed together with the measurement data along the line. Moreover, in some embodiments color curves as mentioned along the at least one line may be displayed in a color map to give the operator additional information.

Some embodiments may include a smoothing of the curve represented by the scalar values, for example by applying a low pass filtering. Smoothing the curve may reduce effects from measurement noise and small deviations. In other embodiments, a curve without smoothing may be evaluated to monitor small scale variations of the differences of measurement data.

In addition, or alternatively to evaluating gradient of a spectacle lens based on one or more threshold values, a deviation of the curve represented by the scalar values may be compared with an ideal curve, either for the whole curve or only for a specific portion of the curve, for example a portion above a further threshold value like 0.5 (50%). For example, in this way a deviation from an ideal transition may be determined. The ideal curve for a transition may be a Gaussian curve, and a deviation from the curve between the curve given by the scalar values and the Gaussian curve may for example be determined according to the following formula:

$$I_{(GD)} = \frac{\sum_{i=1}^{n} |y_i - y_i'|}{\sum_{i=1}^{n} y_i'}$$

$I_{(GD)}$ is a deviance index from the reference Gaussian curve. The numerator calculates the sum of the absolute differences between the reference Gaussian curve ($y'_i$ values) and the scalar values $y_i$, e.g.

$\Delta E_{CMC}(1:1)$ values, in a graph area with Y (vertical axis) greater than the further threshold value, e.g. 0,5 . In the denominator the sum of the Y>0,50 of the G curve is calculated.

The $I_{(GD)}$ index has a value of 0% in case of perfect overlapping scalar values and Gaussian curves (best case).

The $I_{(GD)}$ index has a value of 100% in case of maximum difference between the scalar values and the Gaussian curve (worst case).

Based on the deviation from the ideal curve, a quality measure may be obtained and output (for example a low quality value for a high deviation and correspondingly a high quality value for a low deviation). Likewise, a quality value may be generated based on the deviations of the above-mentioned positions of transitions from nominal positions. Based on the quality values, for example a manufactured lens may be accepted or discarded, and/or in case of low quality values, a manufacturing device may be recalibrated.

Therefore, according to another aspect, a method suitable for producing and controlling gradient spectacle lenses is provided, which comprises manufacturing a gradient spectacle lens, and evaluating the gradient spectacle lens with any of the methods discussed above.

Apart from the measurement discussed above, the method may be implemented as software on a computer device, for example in form of an excel sheet adapted to perform the calculations above. Therefore, a computer program comprising instructions which, when the program is executed by a computer, cause the computer to carry out the methods mentioned above (apart from the measurement itself) is provided. The instructions may be stored in a memory of the computer or other storage in form of a computer program. A computer-readable storage medium having stored thereon such a computer program and a data carrier signal carrying the computer program are also provided. Furthermore, a computer program stored on a non-transitory tangible computer readable storage medium, the computer program comprising instructions which, when the program is executed by a computer, cause the computer to carry out the method as explained above is provided. It should be noted that the term "computer" above does not necessarily imply a single entity, but also more devices may be coupled with each other and exchange data to perform the methods above. For example, the scalar values may be computed on one device, which are then sent to another device for evaluation, for example comparison with threshold values.

According to a further aspect, a device, for example a computer, comprising a processor configured to perform the methods above is provided. A system including a measurement device for obtaining the measurement data and the computer, where the measurement device provides the measurement data to the computer, is also provided.

Furthermore, a data processing system comprising a processor and a storage medium coupled to the processor is provided, wherein the processor is adapted to perform the steps of the method discussed above, based on a computer program stored on the storage medium.

Preferred embodiments will be explained referring to the attached drawings.

Fig. 1 is a block diagram of a system according to an embodiment.

Fig. 2 is a flowchart illustrating a method according to an embodiment.

Figures 3-13, including respective sub-figures (A, B, C, D), are various diagrams used for illustration of the method shown in Fig. 2.

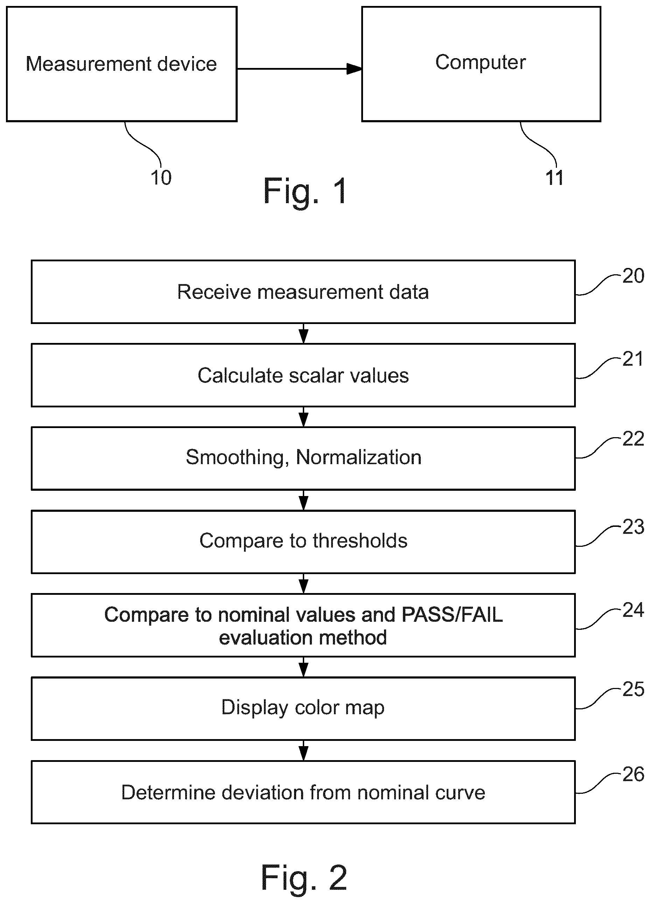

Fig. 1 illustrates a system according to an embodiment. The system of Fig. 1 includes a measurement device 10 and a computer 11. Measurement device 10 is configured to perform measurements of transmission and color of a gradient spectacle lens along at least one line.

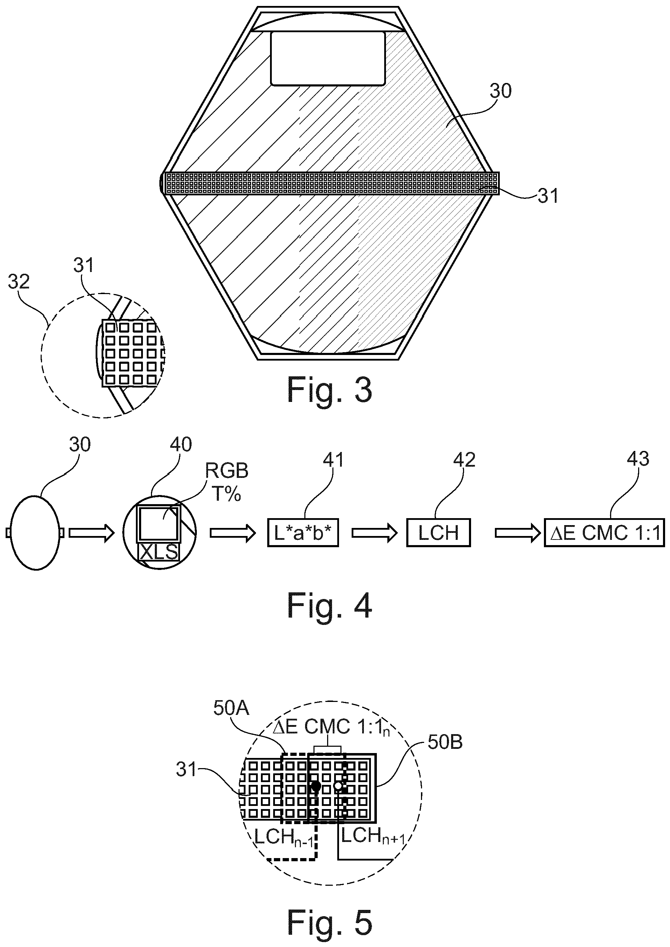

This is illustrated in Fig. 3 showing a gradient spectacle lens 30, where (as can be better seen in inset 32) measurements are performed at measurement points 31 in five parallel lines. The orientation of gradient spectacle lens is such that the lines are parallel to the direction of the gradient, which in Fig. 3 is from left to right. In the embodiment of Fig. 1, measurement device 10 is the UTM measurement device mentioned above, and provides measurement data in form of RGB (red, green, blue) values for colors and a value T for the transmission in percent. Returning to Fig. 1, measurement device 10 provides the measurement data to a computer 11. As mentioned above, computer 11 may be a single computer device or may include a plurality of devices communicating with each other. Computer 11 is configured to perform a method as illustrated in Fig. 2, by programming a processor of computer 11 accordingly.

In Fig. 2, in step 20 the method starts with receiving the measurement data from measurement device 10. Receiving the measurement data may be via a direct connection, via the internet, or by transporting the measurement data on a data carrier.

In step 21, the method comprises a step of calculating scalar values based on adjacent or overlapping point groups of the measurement data. An example will be illustrated referring to Figures 4 and 5.

Fig. 4 shows an example process flow for generating scalar data. Based on the gradient spectacle lens 30, measurement data 40 is obtained in the form of RGB values and transmission, T, values. In the example of Fig. 4, these are provided for each measurement point, for example in form of a table. In the process flow of Fig. 4, this data, by computer 11, is first converted to L*a*b color data 41 and from there to LCh color data 42. Based on the LCh data 42 then, as scalar values, $\Delta E_{CMC}(1:1)$ values 43 are calculated for adjacent or overlapping point groups.

Fig. 5 shows an example for two point groups 50A, 50B of measurement points 31. In this example, 5 points of each of the 5 lines shown line form point groups, and successive point groups 50A, 50B (also designated $LCH_{n-1}$ and $LCH_{n+1}$ in Fig. 5 overlapping by three points are selected, and a value $\Delta E_{CMC}(1:1)_n$ is calculated and assigned to the region n. Other point groups or also single adjacent points may also be used, but as mentioned above selecting point groups with a plurality of points provide an averaging and reduce measurement noise.

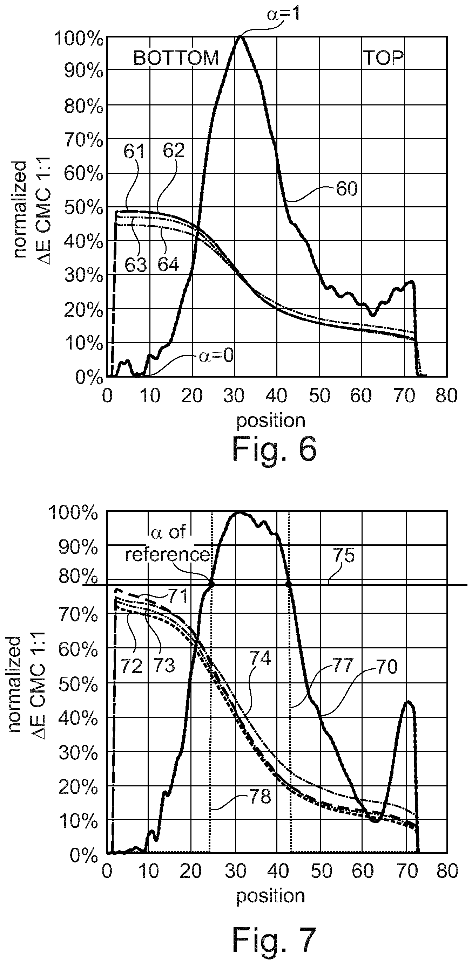

Returning to Fig. 2, at 22 the scalar values may be further processed. One example is a normalization, where the largest scalar value is assigned a value of 1 or 100 %. Fig. 6 shows an example measurement graph for a curve 60 of normalized $\Delta E_{CMC}(1:1)$ values $\alpha$ with a range from $\alpha=0$ to $\alpha=1$ (100%) from bottom to top of a gradient lens. Curves 61 to 64 illustrate the original measurement data, where a curve 61 shows the transparency T, curve 62 shows the red (R) component, curve 63 shows the green (G) component, and curve 64 shows the blue (B) component. As can be seen, curve 60 reaches at its peak ($\alpha=1$) about in the middle of the transition of curves 61-64 from comparatively high to comparatively low values. Therefore, curve 60 can be used as a quantitative measure of the gradient The ripples that can be seen on the left and right sides of the curves are due to measurement noise or tinting tolerances. Due to such ripples, in some embodiments scalar values under 30% of a maximum scalar value are disregarded.

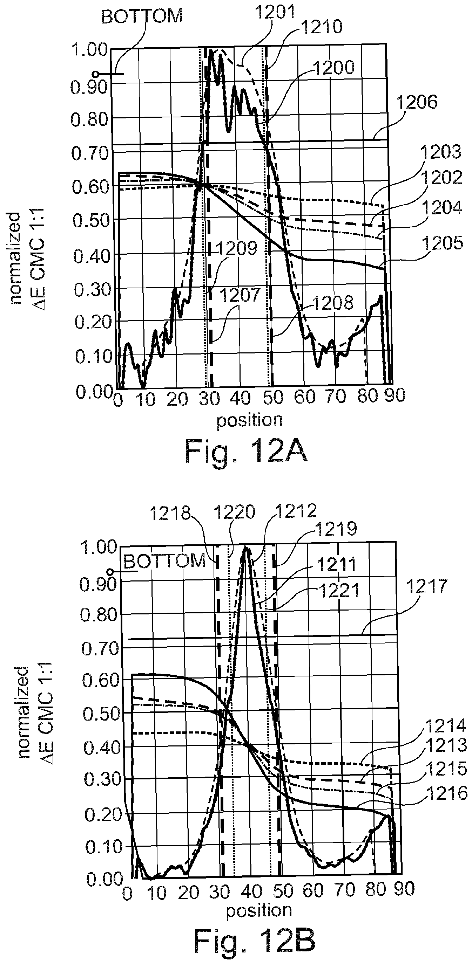

Smoothing is illustrated in Fig. 12A where a curve 1200 of the scalar values calculated is smoothed by filtering to a curve 1201, and in Fig. 12B, where a curve 1211 of scalar values is smoothed to a curve 1212. The remainder of Figures 12A and 12B will be explained further below.

Returning to Fig. 2, the scalar values, possibly after normalization or smoothing, in step 23 are compared to threshold values. A simple example is shown in a measurement graph Fig. 7, where a curve 70 represents the scalar values, a curve 71 represents the measure transmission, and curves 72-74 represent measured red, green and blue values, respectively. A threshold value represented by a line 75 is set as $\alpha$ of reference. The points where curves 70 cross line 75 are marked by dashed vertical lines 78, 77, which represent boundaries between areas of the gradient lens. To the left of line 78, at the "bottom" there is a light, highly transparent area, between lines 78 and 77 there is the transition area with high differences between successive groups of measurement points, and to the right of line 77 there is the dark area at the top of the lens. Therefore, using curve 70 and by selecting a corresponding value for the $\alpha$ of reference according to line 75 the corresponding sections of the lens may be quantitatively determined.

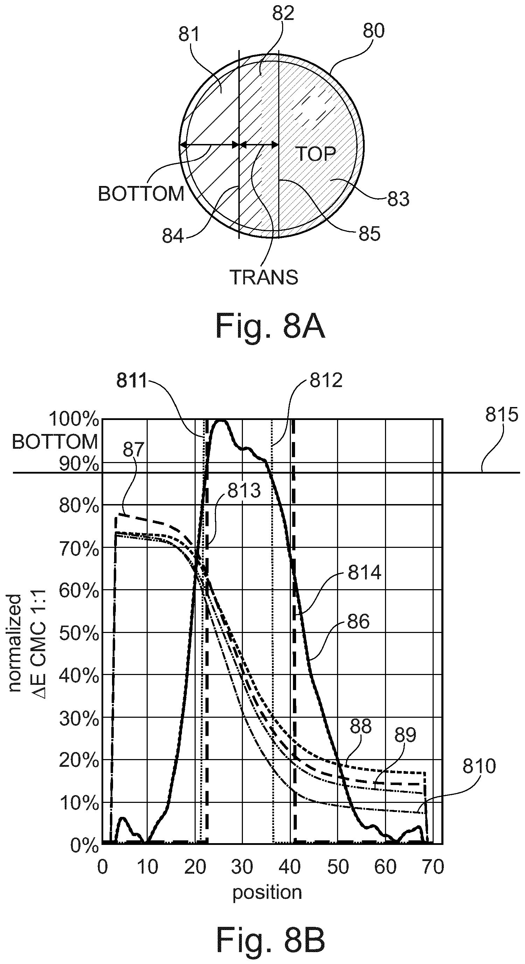

In step 24 of Fig. 2, the positions where the scalar values cross the threshold (s) (in case of Fig. 7 the positions indicated by line 77, 78) may be compared to nominal values. This will be illustrated with respect to Figures 8A, 8B, 9A, 9B and 10A-10D for different types of gradient lenses. A PASS/FAIL method as explained above is then employed.

Fig. 8A shows a standard gradient lens 80 with a lighter bottom area 81, a transition area 82 and a darker top area 83, where the bottom area 81 is separated from transition area 82 by a line 84 and transition area 82 is separated from top area 83 by a line 85 (the lines are only for illustration and not present in the actual lens). In use, the lighter area 81 is worn at the bottom, and the darker area is worn at the top, even if they are represented left to right in Fig. 8A (and similar representations are used in the following Figures)

Fig. 8B shows an example measurement graph of the lens of Fig. 8A. A curve 86 shows the normalized $\Delta E_{CMC}(1:1)$ values, as has been explained previously for curve 60 and 70 of Figs. 6 and 7. A curve 87 shows the transmission, and curves 88-810 show the measurement result for red, green and blue components, respectively, similar to what has been explained for curve 61-64 of Fig. 6.

A line 815 denotes the threshold value, corresponding to line 75 of Fig. 7. Vertical dashed lines 811 and 812 illustrate where curve 86 crosses 815, corresponding to lines 78 and 77 of Fig. 7.

Vertical lines 813 and 814 show nominal positions of the boundaries of the transition area. As can be seen, the position of dashed line 811 in this example coincides well with line 813, whereas dashed line 812 deviates from line 814. The amount of the deviation may be taken as a measure of the quality of the lens. The position of lines 813 and 814 may for example be determined based of specifications for the respective lens or by measuring a lens (e.g. master lens) which has been evaluated as correct by other means, for example the conventional measurement using a ruler.

The threshold value as indicated by line 815 is selected such that lines 811 and 812 denote the position of lines 84 and 85 of Fig. 8A, i.e. the boundaries of transition area 82.

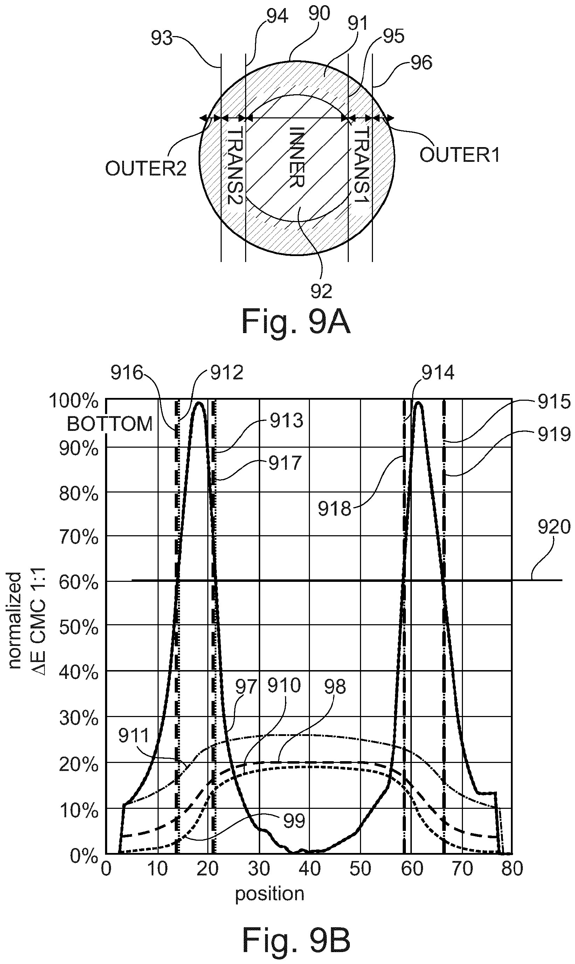

Figures 9A and 9B show an embodiment for a lens which has a lighter inner side and a darker outer side. Fig. 9A shows an example lens 90 having an essentially circular lighter inner area 92 and a ring-shaped darker outer area 91, separated by a ring-shaped transition area. When measuring along a line, as shown in Fig. 9A two transition areas TRANS1 and TRANS2 appear to be present, once when transitioning from outer area 91 to inner area 92 and the other when transitioning back from inner area 92 to outer area 91, which are in fact parts of the same ring-shaped transition area which is crossed twice. A transition area TRANS2 is bounded by lines 93 and 94, and a transition area TRANS1 is bounded by line 95 and 96 in Fig. 9A.

Fig. 9B shows a corresponding measurement graph. A curve 97 illustrates the normalized $\Delta E_{CMC}(1:1)$ values over position along the measurement lines, a curve 98 illustrates the transmission, and curves 99, 910 and 911 illustrate the red, green and blue values, respectively. As can be seen, curve 97 has two peaks, corresponding to two transition areas TRANS1 and TRANS2, which are crossed when measuring along a line.

A line 920 illustrates a threshold value for the normalized $\Delta E_{CMC}(1:1)$ values. Dashed lines 912, 913 denote where curve 97 crosses line 920 for the first peak (for example ideally corresponding to the positions of lines 93 and 94 of Fig. 9A), and dashed lines 914 and 915 denote where curve 97 crosses line 920 at the second peak, corresponding to the positions of lines 95, 96 of Fig. 9A.

Lines 916 and 917 for the first transition area and lines 918 and 919 for the second transition area denote nominal values. In this case, the nominal values mostly coincide with the measured values, with the exception of line 912 showing a slight deviation from line 916. This is therefore an example where the lens may receive a good quality rating.

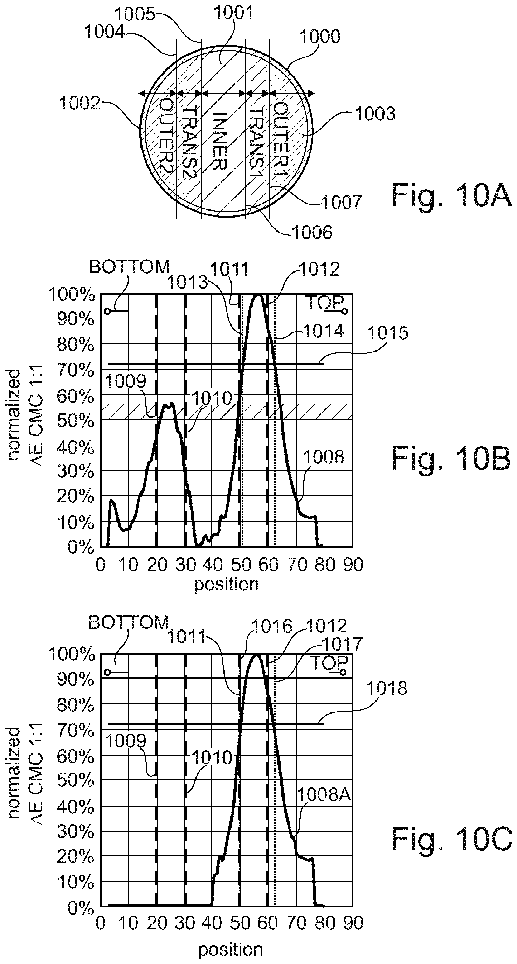

Figures 10A-10B show an example for a lens 1000 with a different kind of coloring. This lens at the top and bottom has dark areas 1002, 1003, and an inner lighter area 1001. In contrast to the lens 900 of Fig. 9A, the areas are not circular, but as shown in Fig. 10A follow each other from top to bottom and extend over the respective width of the lens. Area 1002 is separated from area 1001 via a transition area trans 2, and area 1001 is separated from area 1003 by a transition area trans 1. Lines 1004, 1005 on the one hand and 1006, 1007 on the other hand denote the boundaries of the transition areas.

Fig. 10B shows a first measurement diagram for lens 1000 of Fig. 10A. A curve 1008 shows the normalized $\Delta E_{CMC}(1:1)$ values over position. Lines 1009 and 1010 show nominal positions of the boundary of transition area trans 2 of Fig. 10A, corresponding to the nominal positions of lines 1004, 1005 of Fig. 10A, and lines 1011, 1012 show nominal positions of the boundary of transition area trans 1 of Fig. 10A, i.e. corresponding to the nominal positions of lines 1006, 1007 of Fig. 10A. A nominal position refers to the position according to the design of the lens as intended.

A line 1015 denotes the threshold value when using a single threshold. As can be seen, here only the right peak of curve 1008 intersects line 1015, resulting in dashed lines 1013 and 1014 representing the measured positions of the boundaries of transition area TRANS1, with some deviations from the nominal position 1011, 1012.

For transition area TRANS2, the peak of curve 1008 is lower, and therefore does not intersect line 1015. On the other hand, using a value which intersects both peaks would result in a too broad measured transition area TRANS1 (right peak).

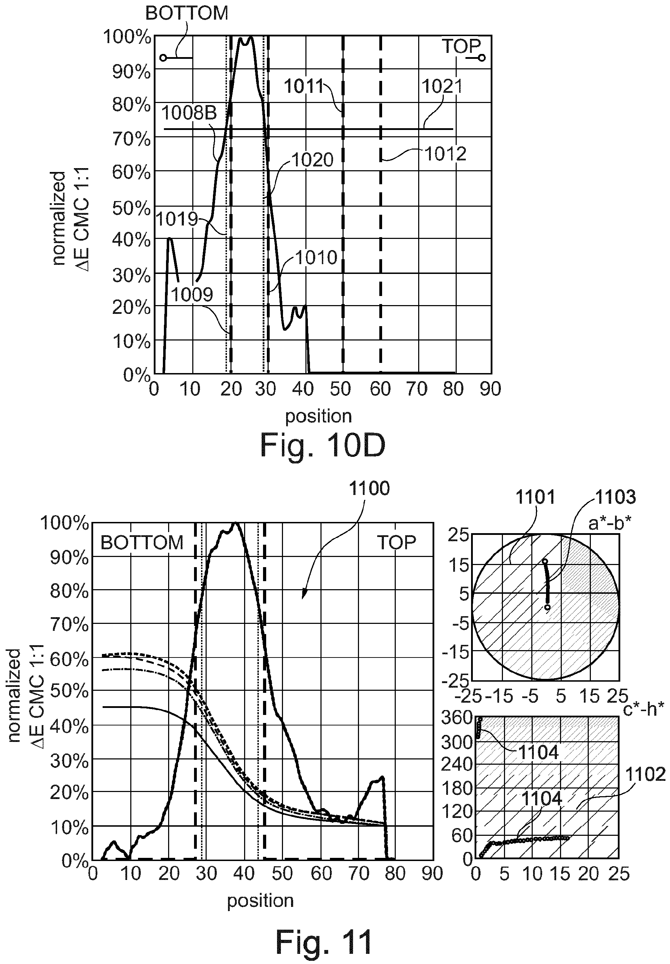

Therefore, in a preferred embodiment shown in Figures 10C and 10D, the peaks are evaluated separately, with different threshold values and/or normalized separately. Features already discussed with reference to Fig. 10B bear the same reference numerals in Figures 10C and 10D and will not be discussed again.

Fig. 10C shows the evaluation for the right peak of curve 1008 of Fig. 10B, the part of the curve corresponding to the right peak being denoted with reference numeral 1008A. A line 1018 corresponds to the reference value, and dashed lines 1016 and 1017 correspond to the positions where curve 1008A crosses line 1018, i.e. the measured positions of the boundaries of transition area TRANS1. The threshold value denoted by line 1018 may correspond to the threshold value denoted by line 1015.

Fig. 10D shows the evaluation for the left peak of curve 1008. The corresponding curve portion is denoted with reference numeral 1008B in Fig. 10D. A line 1021 denotes the threshold value. In the example of Fig. 10B, curve 1008B is normalized to 1 or 100% for its peak value. In this case, effectively the same reference value may be used as in Fig. 10C, but due to the different scaling factors for normalization this also effectively corresponds to using different threshold values. Here, the positions where curve 1008B crosses line 1021 are shown with dashed lines 1019 and 1020, which in this case coincide well with the nominal values according to lines 1009, 1010. In this way, both transition areas may be reliably measured.

Returning to Fig. 2, in step 25 as additional information to an operator, two dimensional graphs of the color coordinates with curves according to the measured values may be displayed in addition to the measurement graphs discussed above. Fig. 11 shows a corresponding embodiment. Here, reference numeral 1100 generally denotes the measurement graph, which may be any of the measurement graphs discussed previously with respect to Fig. 6, 7, 8B, 9B or 10B-10D. In addition, in fields 1101 and 1102 the color coordinates along the lines measured are represented. In field 1101, the color coordinates are shown in terms of a*-b* of the L*a*b color space, and a curve 1103 shows the corresponding values obtained based on the measurement values (red, green, blue values). Field 1102 shows the color as C-h of the LCh color space, and a curve 1104 shows the color along the measured one or more lines based on the measurement results. In this way, an operator can better visualize the color transition.

Figures 12A and 12B show the already discussed smoothing of the curve, together with the measurement values and the evaluation. In Fig. 12A, in addition to curves 1200 and 1201 already discussed, a curve 1202 denotes the measured transmission, and curves 1203, 1204 and 1205 denote the measured red, green and blue values. In case of a plurality of lines, these values may be an average for the lines, for example the five lines of Figures 3 and 5.

A line 1206 denotes the threshold values. Both Figures 12A and 12B show example for standard gradient lenses similar to the one shown in Fig. 8A, i.e. with a single transition. In Fig. 12A, lines 1207 and 1208 show the nominal positions of the boundaries of the transition area, and dashed lines 1209, 1210 show the values obtained by measuring where the smoothed curve 1201 crosses line 1206 representing the threshold.

Fig. 12B shows another example, where a curve 1213 denotes the measured transmission, and curves 1214, 1215 and 1216 denote the measurement for the red, green and blue color components. In some embodiments, the smoothing is only used for lenses where the transition area has a certain minimum width, for example at least 10 mm.

A line 1217 denotes the threshold. Lines 1218 and 1219 denote the nominal positions of the transition areas, and dashed lines 1220 and 1221 denote the positions of the boundary as obtained by the measurement. As can be seen, in this case the transition area is smaller than according to the nominal values.

With the above measurements, the position of transition areas may be determined and compared to nominal values. As mentioned above, in addition or alternatively, in step 26 of Fig. 2, the quality of the gradient of the transition area may be determined.

For example, a perfect gradient, in terms of normalized $\Delta E_{CMC}(1:1)$, may correspond to a Gaussian curve, the general formula of which is

$$ f(x) = \frac{1}{\sqrt{2\pi\sigma^2}} e^{-\frac{(x-\mu)^2}{2\sigma^2}} $$

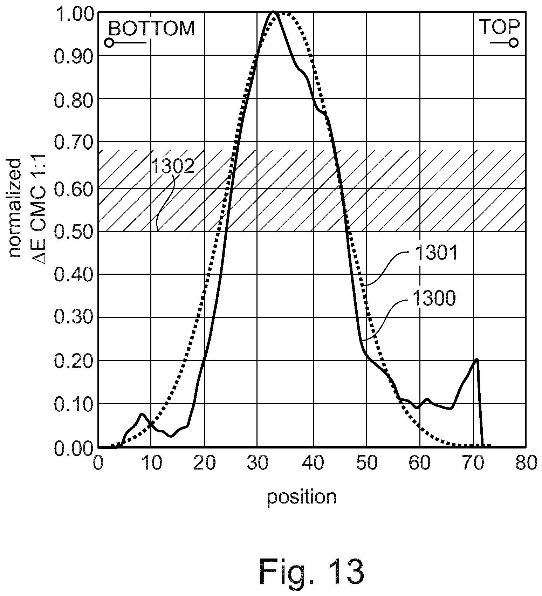

where $\sigma^2$ is the variance and $\mu$ is the center value. For the gradient, $\mu$, as measured form the bottom, corresponds to the width of the bottom + half the width of the transition area (for a standard gradient lens) and $\sigma$ is equal to the width of the transition area x the reference value used x a constant, which may be set to 14/17 The constant that helps to better identify $\sigma$ of the Gaussian curve, and 14/17 has turned out to be a suitable value. The function f gives values corresponding to the $\Delta E_{CMC}(1:1)$ values for positions x (lens diameter/lens height if the lens is squared). This Gaussian curve may be compared to the measured values of nominalized $\Delta E_{CMC}(1:1)$, as shown in Fig. 13.

In Fig. 13, a curve 1300 corresponds to the normalized $\Delta E_{CMC}(1:1)$, and a curve 1301 corresponds to the Gaussian curve. In some embodiments, if the above formula does not fit, $\sigma$ and $\mu$ may be manually adjusted. For comparing the curves, it is possible to calculate the Deviance index from the reference Gaussian curve as described above. The area (integral) of the curves is evaluated for values greater than a threshold value, for example greater than 0.5, (i.e. above line 1302) may be determined. The deviance index may be translated into a percentage values, and the quality may be measured based on this Deviance index . For example, the quality may be defined as follows:

0-5% excellent
5-10% good
10-15% acceptable
15-20% mediocre
>20% very bad

The above threshold values are merely examples, and other values may be selected.

**Claims**

1. A computer-implemented method suitable for evaluating a gradient spectacle lens, comprising:
receiving measurement data (40) indicating at least one of color and transmission of a plurality of measurement points (31) along at least one line across the gradient spectacle lens (30; 80; 90; 1000), **characterized by**:

calculating scalar values (43) representing a difference between the measurement data of adjacent or overlapping measurement point groups (50A, 50B), each measurement point group (50A, 50B) including at least one measurement point of the plurality of measurement points, and evaluating the gradient spectacle lens (30; 80; 90; 1000) based on the scalar values.

2. The method of claim 1, **characterized in that** evaluating the gradient spectacle lens comprises comparing the scalar values to at least one threshold value.

3. The method of claim 2, further **characterized by** comparing positions along the at least one line where the scalar value crosses the at least one threshold to nominal values.

4. The method of any one of claims 1-3, **characterized in that** evaluating the spectacle lens based on the scalar values further comprises comparing a curve defined by the scalar values over position along the at least one line with a target curve.

5. The method of claim 4, **characterized in that** the target curve comprises a Gaussian distribution.

6. The method of claim 4 or 5, **characterized by** further comprising obtaining a quality measure of a gradient of the gradient spectacle lens based on the deviation of the curve of scalar values from the target curve.

7. The method of any one of claims 1-6 **characterized in that** the at least one line comprises a plurality of parallel lines, and each of the adjacent measurement point groups (50A, 50B) comprises at least one measurement point from each of the plurality of lines.

8. The method of any one of claims 1-7, **characterized in that** the measurement data indicates the color, and the scalar values comprise one of $\Delta E_{CMC}(1{:}1)$ or $\Delta E_{CMC}(2{:}1)$ values.

9. A method suitable for producing gradient spectacle lenses, comprising:
manufacturing a gradient spectacle lens, and evaluating the gradient spectacle lens with the method of any one of claims 1-8.

10. A computer program comprising instructions which, when the program is executed by a computer, causes the computer to carry out the method of any one of claims 1-9.

11. A computer-readable storage medium storing the computer program of claim 10.

12. Data carrier signal carrying the computer program of claim 10.

13. Device comprising a processor configured to perform the following steps:
receiving measurement data (40) indicating at least one of color and transmission of a plurality of measurement points (31) along at least one line across the gradient spectacle lens (30; 80; 90; 1000), **characterized by**:

calculating scalar values (43) representing a difference between the measurement data of adjacent or overlapping measurement point groups (50A, 50B), each measurement point group (50A, 50B) including at least one measurement point of the plurality of measurement points, and
evaluating the gradient spectacle lens (30; 80; 90; 1000) based on the scalar values.

14. The device of claim 13, **characterized in that** evaluating the gradient spectacle lens based on the scalar values further comprises comparing a curve defined by the scalar values over position along the at least one line with a target curve.

15. The computer of claim 13 or 14, **characterized in that** evaluating the gradient spectacle lens comprises comparing the scalar values to at least one threshold value.

Fig. 1

Fig. 2

Fig. 3

Fig. 4

Fig. 5

Fig. 6

Fig. 7

Fig. 8A

Fig. 8B

Fig. 9A

Fig. 9B

Fig. 10A

Fig. 10B

Fig. 10C

Fig. 10D

Fig. 11

Fig. 12A

Fig. 12B

Fig. 13

Europäisches Patentamt

European Patent Office

Office européen des brevets

# EUROPEAN SEARCH REPORT

**Application Number**

EP 23 16 1709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANONYMOUS: "ISO 12311:2013 Personal protective equipment – Test methods for sunglasses and related eyewear", ISO NORM, ISO, CH, 15 November 2013 (2013-11-15), pages 1-85, XP055920725, Retrieved from the Internet: URL:https://www.iso.org/standard/51350.html [retrieved on 2022-05-12] * section 7.2; figure 2 * | 1,2,4-13 | INV. G01M11/02 G01J3/46 G02C7/10 |
| X | ANONYMOUS: "ISO 12312-1:2013 Eye and face protection -- Sunglasses and related eyewear -- Part 1: Sunglasses for general use", ISO NORM, ISO, CH, vol. ISO 12312-1:2013, 1 August 2013 (2013-08-01), pages 1-23, XP009506486, * sections 5.1, 5.3.1 and 5.3.4.3.1 * | 1,2,4-13 | |
| X | JP 2009 109442 A (HOYA CORP) 21 May 2009 (2009-05-21) * par. [0079] – [0083], [0154] – [0167], [0175] – [0180]; figures 4,13,14 * | 1-15 | TECHNICAL FIELDS SEARCHED (IPC) G02C G01M G01J |
| X | JP 2004 326018 A (NIDEK KK; KIWA KAGAKU KOGYO KK) 18 November 2004 (2004-11-18) * paragraph [0060]; figures 1,3; tables 3,4 * | 1,2,4, 6-15 | |
| X | DE 10 2013 003558 A1 (RODENSTOCK GMBH [DE]) 4 September 2014 (2014-09-04) * paragraph [0097] – paragraph [0101]; figures 10,11 * | 1-15 | |

The present search report has been drawn up for all claims

| Place of search | Date of completion of the search | Examiner |
|---|---|---|
| Munich | 4 August 2023 | Klein, Thomas |

EPO FORM 1503 03.82 (P04C01)

**EP 4 431 900 A1**

## ANNEX TO THE EUROPEAN SEARCH REPORT
## ON EUROPEAN PATENT APPLICATION NO.

EP 23 16 1709

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2023

| Patent document cited in search report | | Publication date | Patent family member(s) | | Publication date |
|---|---|---|---|---|---|
| JP 2009109442 | A | 21-05-2009 | JP | 5005504 B2 | 22-08-2012 |
| | | | JP | 2009109442 A | 21-05-2009 |
| JP 2004326018 | A | 18-11-2004 | JP | 4359445 B2 | 04-11-2009 |
| | | | JP | 2004326018 A | 18-11-2004 |
| DE 102013003558 | A1 | 04-09-2014 | NONE | | |

EPO FORM P0459

For more details about this annex : see Official Journal of the European Patent Office, No. 12/82